(19) Europäisches Patentamt
European Patent Office
Office européen des brevets

(11) Veröffentlichungsnummer: **0 525 509 A1**

(12) EUROPÄISCHE PATENTANMELDUNG

(21) Anmeldenummer: **92112036.6**

(51) Int. Cl.5: **C08J 5/12**, B32B 27/08

(22) Anmeldetag: **15.07.92**

(30) Priorität: **27.07.91 DE 4124951**

(43) Veröffentlichungstag der Anmeldung:
**03.02.93 Patentblatt 93/05**

(84) Benannte Vertragsstaaten:
**AT CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Hesse, Anton, Dr.**
**Peter-Nickel-Strasse 15**
**W-6940 Weinheim(DE)**
Erfinder: **Hub, Hans-Henning, Dr.**
**Dr.-Illert-Strasse 37**
**W-6520 Worms 23(DE)**
Erfinder: **Schlarb, Alois, Dr.**
**Hofgut Petersau/Fohlenhof**
**W-6710 Frankenthal(DE)**
Erfinder: **Heckmann, Walter, Dr.**
**Geiersbergstrasse 2**
**W-6940 Weinheim(DE)**

(54) **Schichtstoffe.**

(57) Die Erfindung betrifft einen Schichtstoff aus

A. einer Kernschicht aus einem Olefinpolymerisat und

B. mindestens einer Deckschicht aus einem vorzugsweise glasfaserverstärkten, gehärteten, ungesättigten Polyesterharz,

wobei die Schichten unmittelbar und fest aneinander haftend miteinander verbunden sind.

EP 0 525 509 A1

Die Erfindung betrifft Schichtstoffe aus einer Kernschicht Olefinpolymerisat und mindestens einer Deckschicht aus einem vorzugsweise faserverstärkten, gehärteten ungesättigten Polyesterharz.

Im Automobilbau werden in steigendem Maße Kunststoffe eingesetzt. Flächige Teile werden vor allem aus unverstärkten thermoplastischen Spritzgußmassen, aus glasmattenverstärktem Polypropylen (GMT), auf Basis von ungesättigten Polyesterharzen aus eingedicktem flächigem Halbzeug (SMC) oder aus einer faserverstärkten Spritzgußmasse (BMC) hergestellt.

GMT-Teile weisen eine gute Zähigkeit und damit ein günstiges Bruchverhalten auf, die Glasfasern bewirken jedoch, daß solche Teile oft eine rauhe, unruhige Oberfläche aufweisen. Deshalb wurden sie bisher im Automobilkarosseriebereich noch nicht eingesetzt. Außerdem können sie nicht auf einfache, kostengünstige Weise lackiert werden.

Polyethylen ist ein billiger Kunststoff mit hervorragenden Eigenschaften, der aber im unvestärkten Zustand für einige Anwendungszwecke, z.B. als Baumaterial, keine ausreichende Biegesteifigkeit aufweist.

SMC- bzw. BMC-Teile zeichnen sich durch gute Steifigkeit und hervorragende Oberflächenqualität aus, insbesondere wenn sie Thermoplasten als Niederschrumpf-Zusätze enthalten. Sie haben jedoch den Nachteil, daß sie wegen ihrer geringen Zähigkeit bei Schlagbeanspruchung brechen und splittern.

Der Erfindung lag die Aufgabe zugrunde, die guten Eigenschaften von GMT-Teilen bzw. Polyethylenteilen einerseits und SMC- bzw. BMC-Teilen andererseits miteinander zu vereinen.

Es wurde nun gefunden, daß Schichtstoffe, bestehend aus

A. einer Kernschicht aus einem Olefinpolymerisat und

B. mindestens einer Deckschicht aus einem vorzugsweise glasfaserverstärkten, gehärteten, ungesättigten Polyesterharz

herstellbar sind, wobei die Schichten ohne haftvermittelnde Zwischenschichten oder mechanische Verankerung unmittelbar miteinander verbunden sind und so gut aneinander haften, daß beim Versuch, sie zu trennen, die Rißfront nicht an der Grenzfläche, sondern innerhalb einer der beiden Schichten verläuft.

In der JP-A 57-102344 ist ein Verfahren zur Kaschierung von Holzplatten beschrieben, bei dem ein Holzkern mit einer vernetzbaren SMC-Schicht und diese wiederum mit einer Deckschicht aus vernetzbarem EPDM-Kautschuk belegt wird. Die Deckschichten werden mit dem Kern bei erhöhter Temperatur verpreßt und dabei zusammen vernetzt.

Nach der GB-A 1 280 995 wird ein Laminat hergestellt, indem man in eine erweichte Polypropylenfolie eine Mischfasermatte aus Glas- und Polypropylenfasern so einpreßt, daß die Glasfasern teilweise in die Polypropylenmatrix eindringen und teilweise aus dieser herausragen. Darauf wird eine Schicht aus ungesättigtem Polyesterharz gesprüht und dieses anschließend gehärtet. Die Glasfasern stellen eine mechanische Verankerung zwischen Polypropylen-und UP-Harz-Schicht dar.

Nach der JP-A 62-70 028 werden Heißwassertanks hergestellt aus einer Thermoplastgrundschicht, die mit einem Niedertemperatur-Plasma physikalisch vorbehandelt wird, und auf welche dann ein vernetzbares Harz gesprüht und anschließend gehärtet wird. Durch die Plasmabehandlung wird auf der Thermoplastgrundschicht eine monomolekulare haftvermittelnde Sauerstoffzwischenschicht erzeugt, welche als Haftvermittler zu der Harzdeckschicht wirkt.

Die Kernschicht A ist auf Basis eines Olefinpolymerisats aufgebaut. Geeignete Polyolefine sind aus der Polymerchemie bekannt, sie sind z.B. im Kunststoff-Handbuch, Band IV, Polyolefine, herausgegeben von R. Vieweg, A. Schley und A. Schwarz, Carl Hanser Verlag, München, 1969, beschrieben und sind im Handel erhältlich, so daß sich nähere Angaben erübrigen.

Anwendung finden z.B. Ethylen- und Propylenhomopolymerisate, insbesondere Polypropylen, das durch Polymerisation von Propylen in Gegenwart eines Ziegler-Natta-Katalysatorsystems hergestellt wird und einen Schmelzindex MFI von 0,1 bis 200 g/10 min bei 190 °C und 2,16 kg besitzt und einen Zug-E-Modul von größer 300 $N/mm^2$ aufweist.

Geeignet sind auch Copolymerisate, hergestellt z.B. durch statistische Copolymerisation oder Blockcopolymerisation von Propylen mit Ethylen, Buten-1, Penten-1, 3-Methylpenten-1, Hexen-1, Hepten-1 oder Octen-1 oder Dienen, wie z.B. Norbornadien oder Dicyclopentadien, mit einem Propylengehalt von größer als 80 %, einem Zug-E-Modul von größer als 500 $N/mm^2$ und einem Schmelzpunkt von über 155 °C.

Verwendet werden können auch Blockcopolymerisate aus Propylen und Ethylen mit einem Kristallitschmelzpunkt von über 160 °C, einem E-Modul von größer als 600 $N/mm^2$ und einem Gehalt an Ethyleneinheiten von 3 bis 20 Gew.%, bezogen auf das Gesamtgewicht des Copolymerisats.

Bevorzugt sind auch Pfropfpolymerisate, hergestellt durch Polymerisation von olefinisch ungesättigten Carbonsäuren bzw. Derivaten, insbesondere Acrylsäure und Maleinsäureanhydrid in Gegenwart von Polypropylen. Diese chemische Modifizierung bewirkt eine Verbesserung der Glasfaserhaftung an der Matrix. Häufig genügt ein Zusatz von bis zu 30 Gew.% Propylenpfropfpolymerisat zu unmodifiziertem Polypropylen.

Die Schicht A kann auch teilweise oder ganz aus einem recyclierten Olefinpolymerisat bestehen, z.B. aus wiederaufgearbeiteten Polyethylenfolien.

Geeignet sind schließlich auch Polymerblends, bei denen dem Olefinpolymerisat bis zu 80 % seines Gewichts anderer thermoplastischer Kunststoffe, wie z.B. Polyamid, gesättigte Polyester, Styrolpolymerisate oder Polycarbonat zugemischt wurden. Eine besonders gute Haftung der Schichten aneinander erhält man, wenn die Schicht A bis zu 50 Gew.%, vorzugsweise 5 bis 40 Gew.% eines amorphen, gesättigten Polyesters mit guter Styrollöslichkeit enthält, beispielsweise eines solchen auf Basis von Adipinsäure, Cyclohexandicarbonsäure, Orthophthalsäure, Tetrahydrophthalsäure und/oder Hexahydrophthalsäure.

Die Schicht A kann neben dem Olefinpolymerisat 0 bis 50, vorzugsweise 10 bis 40 Gew.-Teile, Verstärkungsfasern, sowie 0 bis 100, vorzugsweise 20 bis 50 Gew.-Teile, Füllstoffe, jeweils bezogen auf 100 Gew.-Teile Olefinpolymerisat, enthalten.

Das Olefinpolymerisat der Kernschicht soll im wesentlichen unvernetzt sein, d.h., es soll in üblichen Lösungsmitteln, z.B. Xylol oder Decalin, einem hydrierten Naphthalin, löslich sein.

Bevorzugte Fasern sind Glasfasern, daneben sind grundsätzlich auch Fasern aus Kohlenstoff, Cellulose, Polyamid und Polyethylenterephthalat geeignet. Die Fasern liegen bevorzugt in Form von Matten mit einem Flächengewicht von 150 bis 1200 $g/m^2$ vor, die durch Nadeln verfestigt oder durch Bindemittel, wie Polyurethane, Aminosilane oder Epoxysilane gebunden sein können. Es können aber auch bi- oder multiaxiale Gewebe, Gewirke, Vliese oder Filze verwendet werden. In manchen Fällen werden mit Vorteil unidirektional orientierte Fasergelege eingesetzt. Auch geschnittene Rovings sind geeignet.

Als Füllstoffe kommen Kreide, Talkum, Aluminiumoxidhydrat, Kaolin, Glimmer und gemahlene Glasfasern in Frage. Daneben kann die Schicht A noch übliche weitere Zusatzstoffe, wie Stabilisatoren, Flammschutzmittel, Antistatika, Nucleierungs- und Fließhilfsmittel enthalten.

Geeignete Füllstoffe sind auch vernetzte ungesättigte Polyesterharze, die durch Polymerisation des Harzes in einer Polyolefinschmelze in einem Extruder hergestellt werden können. Das Duromer bildet dabei in der Polyolefinmatrix eine disperse Phase. Schließlich können als Füllstoff auch bis zu 80 Gew.-% eines partikelförmigen vernetzten, glasfaserhaltigen SMC- oder BMC-Recyclats in der Schicht A enthalten sein.

Das für die Herstellung von Baumaterialien eingesetzte Polyethylen enthält vorzugsweise 5 bis 50 Gew.-% Füllstoffe, wie Kaolin, Kreide, Talkum oder Kurzglasfasern, es kann ferner bis zu 80 Gew.-% Thermoplast-Recylat, z.B. aus GMT-Abfällen, enthalten, gegebenenfalls auch Holzmehl und Holzfasern.

Die Schicht A wird vorzugsweise durch Tränken von Glasfasermatten mit einer Schmelze des Olefinpolymerisats und Konsolidieren in einer Doppelbandpresse hergestellt (DE-B 29 48 235), grundsätzlich sind aber auch andere Verfahren, wie Pultrusion, Spritzgießen und Spritzprägen möglich. Die Dicke der Schicht A kann in weiten Grenzen zwischen 0,1 und 10 mm schwanken.

Die Deckschicht B ist auf Basis eines ungesättigten Polyesterharzes aufgebaut. Diese Harze sind durch einen Gehalt an

$$-\underset{\underset{O}{\|}}{C}-O- \quad \text{und} \quad -CH=CH- \quad \text{Gruppen gekennzeichnet.}$$

Bevorzugt sind die ungesättigten Polyesterharze im strengeren Sinne (UP-Harze). Diese liegen im allgemeinen als Lösungen von 80 bis 40 Gew.% ungesättigter Polyester in 20 bis 60 Gew.% eines copolymerisierbaren Monomeren vor. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als copolymerisierbare Monomere kommen die üblichen Allyl- und Vinylverbindungen in Frage, vorzugsweise Styrol, α-Methylstyrol, Diallylphthalat, Methylmethacrylat oder 2-Hydroxyethylmethacrylat.

Besonders gute Haftung der Schichten B an der Kernschicht A erhält man dann, wenn man als ungesättigte Polyesterharze solche mit einer guten Styrolverträglichkeit, vorzugsweise von größer als 100g Styrol pro 1 g Polyester (bei 23°), einsetzt. Derartige Polyester enthalten z.B. cycloaliphatische Bausteine, vorzugsweise solche auf Basis von Dicyclopentadien, Endomethylentetrahydrophthalsäure oder Diolen der Struktur

HO—M—OH

mit M = 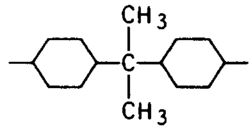 , 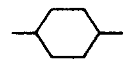 , 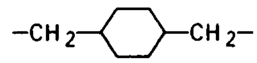 ,

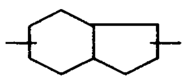 , 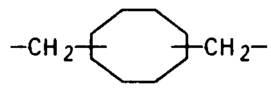 , 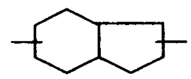 ,

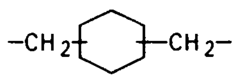 , 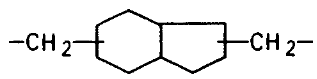 , 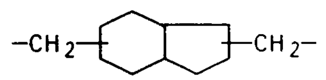 ,

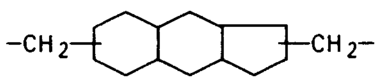 , 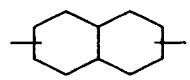 , 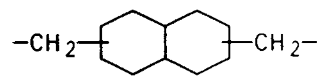 .

Die Menge der cycloaliphatischen Bausteine im ungesättigten Polyester beträgt vorzugsweise 0,1 bis 1 Mol pro (Maleinsäure + Fumarsäure)-Baustein. Geeignete styrollösliche ungesättigte Polyester sind auch solche auf Basis von alkylsubstituierten Alkoholen oder Etheralkoholen, z.B. von Neopentylglykol oder von Dipropylenglykol.

Die Säurezahl des ungesättigten Polyesterharzes sollte unterhalb von 100, insbesondere zwischen 0 und 50 liegen. Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits, gelöst in Styrol.

Geeignet sind auch Vinylesterharze (VE-Harze). Kennzeichnend für diese Klasse von Harzen ist die Gruppe

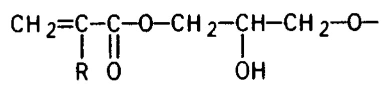

mit R = H oder $CH_3$.

Unter VE-Harzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Vinylesterurethanharze (VU-Harze) sind bekannt, Z.B. aus US-A 3 297 745, US-A 3 772 404, US-A 4 618 658, GB-A 2 217 722 und DE-A 37 44 390. Sie weisen im allgemeinen folgende Gruppen auf:

a)

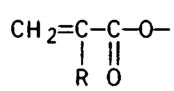

(mit R = H oder $CH_3$)

b)

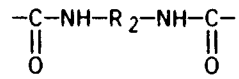

(mit $R_2$ = zweiwertiger aliphatischer, aromatischer oder cycloaliphatischer Rest mit 4 bis 40 C-Atomen, vorzugsweise ein aromatischer Rest mit 6 bis 20 C-Atomen),

gegebenenfalls

c) $-O-R_3-O-$

(mit $R_3$ = zweiwertiger aliphatischer, cycloaliphatischer oder aromatischer Rest mit 2 bis 500 C-Atomen, vorzugsweise ein aliphatischer Rest mit 4 bis 100 C-Atomen),

sowie gegebenenfalls

d) $-NH-R_4-NH-$

(mit $R_4$ = aliphatischer, cycloaliphatischer oder aromatischer Rest mit 2 bis 100 C-Atomen).

Vorzugsweise ist das VU-Harz ein Umsetzungsprodukt aus

- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,

wobei bei der Umsetzung das Gewichtsverhältnis Isocyanat: (Alkohol + Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die VE- und VU-Harze werden zur Herstellung der Deckschicht ebenfalls als Lösungen in copolymerisierbaren Monomeren eingesetzt.

Die Schicht B enthält auf 100 Gew.-Teile des Polyesterharzes bis zu 400, vorzugsweise 10 bis 300 Gew.-Teile Verstärkungsfasern. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern oder als gemahlene Fasern vorliegen, als Langfasern in Form von Einzelrovings, Bahnen aus parallelen Rovings, Gelege aus orientierten Fasern, Fasermatten, Faservliese, Fasergewebe oder Fasergewirke, bevorzugt aber als geschnittene Rovings eine Länge von bis zu 5 cm.

Zur Schrumpfkompensation enthält das zur Herstellung der Deckschichten eingesetzte Polyesterharz vorzugsweise ein thermoplastisches Polymerisat in Mengen von bis zu 50, vorzugsweise von 10 bis 30 Gew.-Teile, bezogen auf 100 Gew.-Teile Harz.

Als thermoplastisches Polymer kommen z.B. Polystyrol, schlagfest modifiziertes Polystyrol, Polymethylmethacrylat, Polyvinylacetat, Ethylenvinylacetatcopolymer und entsprechende Copolymere und Pfropfcopolymere in Frage. Es eignen sich auch gesättigte Polyester und thermoplastische Polyurethane. Ebenfalls geeignet sind kautschukartige Blockcopolymere, insbesondere solche aus 40 bis 95 Gew.% eines Diolefins, z.B. Butadien, Isopren oder Chloropren, und 60 bis 5 Gew.% eines Vinylaromaten, z.B. Styrol oder p-Methylstyrol.

Werden die Deckschichten aus flächigen SMC-Massen hergestellt, dann liegen diese in eingedickter Form vor. Zum Eindicken werden die üblichen Eindickmittel, z.B. Oxide und Hydroxide des Magnesiums oder Calciums verwendet, ferner Isocyanate, gegebenenfalls zusammen mit Aminen, benutzt. Sie werden in Mengen von 0,2 bis 10 Gew.-Teilen, bezogen auf 100 Teile Harz, eingesetzt.

Weiter enthalten die Harze 0,01 bis 5, vorzugsweise 0,5 bis 3 Gew.-Teile, bezogen auf 100 Gew.-Teile Harz, eines Polymerisationsinitiators. Als Polymerisationsinitiatoren werden übliche, bei Temperaturen oberhalb von 50 ° C in Radikale zerfallende Peroxide eingesetzt. Ihre Halbwertszeit bei 50 ° C soll vorzugsweise größer als 100 h sein. In Frage kommen Diacylperoxide, Peroxydicarbonate, Peroxyester, Perketale, Ketonperoxide, Hydroperoxide und Dialkylperoxide, sowie Azoverbindungen und C-C-labile Verbindungen.

Weitere Zusatzstoffe sind Füllstoffe in Mengen von 0 bis 300 Gew.-Teilen, wie Kreide, Kaolin, Quarzmehl, Talkum und Aluminiumoxidhydrat, ferner übliche Inhibitoren, insbesondere Phenole, Chinone oder Nitrosoverbindungen, Gleitmittel, wie z.B. Wachse, Paraffine zur Vermeidung der Oberflächenverdunstung, sowie Flammschutzmittel und Formtrennmittel.

Zur Herstellung der erfindungsgemäßen Schichtstoffe wird zunächst die Kernschicht A vorgeformt, indem man platten-, folien- oder granulatförmiges Halbzeug aus dem Olefinpolymerisat vorzugsweise bei Temperaturen zwischen 170 und 250 ° C durch Pressen, Extrudieren, Spritzgießen, Tiefziehen oder Blasformen zur Kernschicht formt. Auf diese - vorzugsweise noch heiße - Kernschicht wird dann ohne physikalische, chemische oder mechanische Vorbehandlung unmittelbar das Peroxid enthaltende ungesättigte Polyesterharz als Schicht B aufgebracht und bei Temperaturen zwischen 70 und 200 ° C, vorzugsweise

zwischen 110 und 170 °C, gehärtet. Es wird angenommen, daß dabei eine radikalisch ausgelöste C-C-Verknüpfung zwischen der Polyolefin-Molekülkette und der wachsenden Molekülkette des Polyesterharzes eintritt.

Die Erfindung läßt sich durch verschiedene Ausführungsformen realisieren:

A1. Will man die Oberfläche eines GMT-Teils veredeln, dann geht man aus von einem GMT-Halbzeug als Schicht A, welches als plattenförmiges Halbzeug vorliegt. Dieses wird im Strahlerfeld, durch Kontakt oder konvektiv auf 170 bis 250 °C, vorzugsweise 200 bis 230 °C, aufgeheizt und in einer statischen Presse bei einer Werkzeugtemperatur zwischen 40 bis 110 °C im Form- oder Fließpreßverfahren zu einem Fertigteil verpreßt, welches als Vorformling die Kernschicht A darstellt. Die Kernschicht kann eben sein oder beliebige Konturen aufweisen. Insbesondere das Fließpreßverfahren erlaubt eine hohe Gestaltungsfreiheit, so daß komplizierte Geometrien mit versteifenden Rippen möglich sind. Die Wandstärken der Vorformlinge liegen dann gewöhnlich zwischen 1 mm bis 4 mm.

Auf den Vorformling wird die Deckschicht B einseitig oder beidseitig aufgebracht. Diese hat vorzugsweise folgende Zusammensetzung:

100 Gew.-Teile Harz,
20 bis 200 Gew.-Teile Glasfasern einer Länge von mehr als 2,5 mm,
0 bis 250 Gew.-Teile Füllstoff,
0 bis 30 Gew.-Teile eines schrumpfmindernden Thermoplasten,
0,5 bis 8 Gew.-Teile eines Eindickmittels,
0,5 bis 3 Gew.-Teile eines peroxidischen Initiators,
3 bis 5 Gew.-Teile Formtrennmittel.

Die Deckschicht kann nach verschiedenen Methoden auf die Kernschicht aufgebracht werden:

a) Nach dem Preßvorgang wird die Presse geöffnet, der Vorformling entnommen und in ein mit der Deckschicht B belegtes zweites Werkzeug eingelegt. Die der Deckschicht zugewandte Werkzeughälfte hat dabei vorzugsweise 130 bis 170 °C, die der Deckschicht abgewandte Seite 30 bis 90 °C.

Die Presse wird dann wieder geschlossen und etwa 1 bis 10 min lang bei 90 bis 150 °C gehalten. Dabei härtet das ungesättigte Polyesterharz aus, verbindet sich mit dem Olefinpolymerisat und bildet die Deckschicht(en) B, die 0,3 bis 5 mm dick sein können. Die Fasern der Deckschicht liegen zweidimensional in einer Ebene. Zusammen mit der schrumpfmindernden Thermoplastkomponente hat dies zur Folge, daß der entstandene Schichtstoff eine glatte, harte Oberfläche mit erhöhter Festigkeit und Wärmeformbeständigkeit aufweist.

b) Man kann auch in den Spalt der geöffneten Presse zwischen der Kernschicht A und der Formwand eine BMC-Masse einspritzen. Diese hat vorzugsweise folgende Zusammensetzung:

100 Gew.-Teile Harz,
10 bis 50 Gew.-Teile Glasfasern mit einer Länge von 10 bis 50 mm,
100 bis 300 Gew.-Teile Füllstoff.
0,5 bis 3 Gew.-Teile eines Initiators,
3 bis 5 Gew.-Teile Formtrennmittel.

Auch hier wird die Härtung des Harzes durch Verpressen bei einer Temperatur zwischen 90 und 150 °C vorgenommen. Die BMC-Deckschicht weist nicht die hohe Festigkeit wie bei SMC auf.

c) Will man lediglich die Oberfläche des GMT-Teils einfärben und eine glatte Oberfläche erzeugen, dann genügt es, ein Farbpigmente enthaltendes Harz einzuspritzen und auszuhärten ("In-Mold-Coating"). Hier reicht es aus, wenn die Deckschicht nur 50 bis 300 µm dick ist.

A2. Statt in einer Presse kann der erfindungsgemäße Schichtstoff auch in einem Spritzgußwerkzeug hergestellt werden. Hierbei wird zunächst in die Form eine Mischung aus Olefinpolymerisat-Schmelze und gegebenenfalls kurzen Glasfasern eingespritzt. Die Schmelze läßt man auf etwa 100 °C abkühlen, öffnet die Form so weit, daß zwischen der Oberfläche der Kernschicht und der Formwandung ein Spalt entsteht und spritzt in diesen eine BMC-Masse oder ein pigmentiertes ungesättigtes Polyesterharz ein. Auf diese Weise kann man die Oberfläche von Polyolefin-Spritzgußteilen verbessern bzw. auf kostengünstige Weise einfärben.

A3. Will man das Bruchverhalten von SMC- oder BMC-Formteilen verbessern, dann geht man von einer dünnen Polyolefin-Schicht A aus, deren Dicke 0,1 bis 2 mm betragen kann. Zur Erzielung besonders guter Eigenschaften kann als Olefinpolymerisat ein Ethylen/Propylen-Copolymerisat (EPDM-Kautschuk) oder eine Polyethylenfolie eingesetzt werden.

a) Beim SMC-Verfahren wird in einem Preßwerkzeug zwischen zwei SMC-Lagen als Deckschichten die Kernschicht eingelegt, dann wird die Presse geschlossen und die Härtung wird auf übliche Weise vorgenommen.

b) Beim BMC-Verfahren wird in das Spritzgußwerkzeug erst die Kernschicht eingelegt und dann wird

von oben und unten die BMC-Masse eingespritzt und gehärtet.

Auf diese Weise kann man das Crash-Verhalten von Automobilteilen aus SMC bzw. BMC verbessern. Bei einer besonderen Ausführungsform verwendet man perforierte Kernschichten, was dazu führt, daß sich nach der Härtung versteifende Stege ausbilden.

A4. Die Erfindung eröffnet auch die Möglichkeit, die bei der üblichen SMC-Herstellung verwendeten Abdeckfolien in das Fertigteil einzubauen, wenn man als Abdeckfolie eine Polyethylen- oder Polypropylenfolie oder eine Polyethylen/Polyamid-Verbundfolie, die gegebenenfalls faserverstärkt sein können, verwendet. Zusätzlich kann man als weitere Außenschichten SMC-Folien aufbringen, die eine Niederschrumpf-Komponente enthalten. Auf diese Weise erhält man eine ausgezeichnete glatte, lackierfähige Oberfläche.

A5. Um besondere Effekte zu erzielen, ist es grundsätzlich auch möglich, abwechselnd mehrere Kernschichten A und Deckschichten B aufeinanderzulegen und zu verpressen.

A6. Ganz neue Perspektiven eröffnet die Möglichkeit, relativ dicke Kernschichten aus einem Ethylenpolymerisat durch SMC-Deckschichten zu veredeln. Die Kernschicht kann aus Polyethylen bestehen; bessere Haftung erhält man mit Copolymerisaten, die polare Gruppen tragen, z.B. Ethylen/Acrylat-Copolymere. Das Ethylenpolymerisat kann Füllstoffe, wie Kreide, Kaolin, Holzspäne oder Kurzglasfasern enthalten, ferner Recylate von verträglichen Kunststoff-Abfällen, wie z.B. von GMT. Die Kernschicht ist hier vorzugsweise 5 bis 25 mm dick, hierauf werden 0,3 bis 5 mm dicke SMC-Deckschichten aufgebracht. Dies kann entweder dadurch geschehen, daß man auf eine vorgefertigte Kernschicht-Platte SMC aufpreßt und härtet, oder daß man die Kernschicht extrudiert und beidseitig die SMC-Deckschichten zuführt und verpreßt. Derartige Schichtstoffe haben einerseits eine geringe Dichte, hohe Zähigkeit und gutes Dämpfungsvermögen, andererseits verleihen die SMC-Deckschichten dem Verbund eine glatte, glänzende Oberfläche und eine gute Härte und Steifigkeit. Der Schichtstoff kann genagelt und verschraubt werden, wodurch sich Anwendungen als Baumaterialien, z.B. als Schalbretter, Kunststoffpaletten oder Dekor-Panele eröffnen.

Die Anwendungsgebiete der erfindungsgemäßen Schichtstoffe liegen dort, wo Formteile mit einer guten Oberflächenqualität, hoher Steifigkeit und Wärmeformbeständigkeit einerseits und eine gute Zähigkeit und ein splitterfreies Bruchverhalten andererseits gefordert sind, z.B. bei Automobilkarosserieteilen, Abdeckungen für Maschinen und elektrische Anlagen, sowie Baumaterialien. Ein nicht zu unterschätzender Vorteil der erfindungsgemäßen Schichtstoffe liegt auch darin, daß mit einem einzigen Polyolefintyp durch Variation der Deckschichten mit leicht zugänglichen SMC-Einstellungen Formteile mit unterschiedlicher Farbe, Steifigkeit und Oberflächenqualität hergestellt werden können.

Die in den folgenden Beispielen genannten Teile und Prozente beziehen sich auf das Gewicht.

Einsatzstoffe für die Deckschichten:

1. Ungesättigte Polyesterharze

Harz 1

wird zweistufig kondensiert. Unter Rühren und Darüberleiten von Stickstoff werden 478 Teile Propylenglykol und 171 Teile o-Phthalsäureanhydrid bei 200 °C bis zur Säurezahl 15 verestert. Propylenglykol wird mit einem Dephlegmator zurückgehalten. Nach Zusatz von 232 Teilen Dipropylenglykol und 568 Teilen Maleinsäureanhydrid wird die Veresterung bis Säurezahl 28 fortgesetzt, bei 130 °C mit Hydrochinon stabilisiert (150 ppm, bezogen auf ungesättigten Polyester und Styrol) und mit 660 Teilen Styrol vermischt.

Harz 2

Ein ungesättigter Polyester mit Säurezahl 28 wurde in einem zweistufigen Verfahren hergestellt, bei dem im ersten Schritt äquimolare Mengen Dicyclopentadien und Maleinsäure bei 125 bis 135 °C zum Maleinsäurehalbester umgesetzt und im Folgeschritt mit Ethylenglykol bei 190 °C kondensiert werden. Die Einsatzstoffe weisen ein Molverhältnis Maleinsäure:Dicyclopentadien:Ethylenglykol wie 1:1:0,55 auf. Der ungesättigte Polyester wurde 70 %ig in Styrol gelöst und mit 100 ppm Hydrochinon stabilisiert.

Harz 3

Ein ungesättigter Polyester mit Säurezahl 28 wurde hergestellt aus Maleinsäureanhydrid und Propylenglykol im Molverhältnis 1:1. Er wurde 65 %ig in Styrol gelöst und mit 120 ppm Hydrochinon stabilisiert.

Harz 4

Ein ungesättigter Polyester mit Säurezahl 24 wurde hergestellt aus Maleinsäureanhydrid, o-Phthalsäureanhydrid, Adipinsäure, Propylenglykol und Dipropylenglykol im Molverhältnis 1:1:2:2:2,3. Er wurde 75 %ig in Styrol gelöst und mit 100 ppm Hydrochinon stabilisiert.

Harz 5

Ein ungesättigter Polyester mit Säurezahl 29 wurde hergestellt aus Maleinsäureanhydrid und Dipropylenglykol im Molverhältnis 1:1. Er wurde 65 %ig in Styrol gelöst und mit 120 ppm Hydrochinon stabilisiert.

2. Polymerlösungen für SMC-Systeme

Die Polymeren wurden durch Suspensionspolymerisation bei 90 °C in Wasser hergestellt, wobei 0,7 % tert.-Butylperoctoat als Initiator diente. Im Anschluß an die Polymerisation erfolgte eine Wasserdampfdestillation und die Isolierung der Polymerteilchen in Festform. Sie wurden getrocknet, bei ca. 80 °C in Styrol 40 %ig gelöst und mit 100 ppm Hydrochinon sowie 200 ppm Dimethylchinon stabilisiert.

| Polymerlösung | Polymerkenndaten | | |
|---|---|---|---|
| | Aufbau (%) | K-Wert | Säurezahl |
| 1 | Vinylacetat (83,6)<br>Crotonsäure ( 6,4) | 29,7 | 45 |
| 2 | Vinylacetat (98,8)<br>Crotonsäure ( 1,2) | 35 | 7,5 |

Polymerlösung 3

Die Lösung enthält 45 % Polyesterurethan in Styrol, sie ist mit 100 ppm Hydrochinon und 1000 ppm Dimethylchinon stabilisiert. Zu ihrer Herstellung wurde aus Adipinsäure, Ethylenglykol und Propylenglykol im Molverhältnis 1:0,64:0,44 ein Polyester mit Säurezahl 11 kondensiert, in Styrol gelöst und nach Zusatz von 400 ppm Dibutylzinndilaurat bei 50 bis 70 °C mit 1,2 % Toluylendiisocyanat kettenverlängert.

3. SMC-Herstellung

SMC 1 (Standard)

Aus folgenden Einsatzstoffen wurde mit Hilfe eines Rührwerks eine fließfähige Paste hergestellt und auf einer SMC-Technikumsanlage mit Glasfasern zu einem Halbzeug verarbeitet:

| | |
|---|---|
| 100 | Teile Harz 1 |
| 150 | Teile Füllstoff Kreide (Millicorb®) |
| 4,5 | Teile Zinkstearat |
| 1,5 | Teile tert.-Butylperbenzoat |
| 3,75 | Teile MgO-Paste (Luvatol MK 35®) |

Der Glasfasergehalt betrug 28 % (Schnittrovings, 2,5 cm lang). Die Formmasse wurde zwischen Polyethylenfolien bei 23 °C styroldicht verpackt und mindestens 3 Tage gelagert.

SMC 2 (Standard)

Analog zu SMC 1 wurde aus folgenden Komponenten ein Halbzeug mit 30 Gew.% geschnittenen Glasfaserrovings (2,5 cm lang) hergestellt:

| | |
|---|---|
| 72 | Teile Harz 2 |
| 18 | Teile Harz 5 |
| 10 | Teile Polymerlösung 1 |
| 150 | Teile Füllstoff Kreide (Millicorb®) |
| 4,5 | Teile Zinkstearat |
| 1,5 | Teile tert.-Butylperbenzoat |
| 3,75 | Teile MgO-Paste (Luvatol MK 35®) |

SMC 3 (Niederschrumpfsystem)

Aus folgenden Komponenten wurde das Halbzeug mit 30 % geschnittenen Glasfaserrovings (2,5 cm lang) hergestellt:

| | |
|---|---|
| 52 | Teile Harz 3 |
| 22 | Teile Polymerlösung 3 |
| 19 | Teile Polymerlösung 2 |
| 7 | Teile Styrol |
| 0,03 | Teile tert.-Butylbrenzkatechin |
| 220 | Teile Füllstoff Kreide (Millicorb®) |
| 4,5 | Teile Zinkstearat |
| 1,5 | Teile tert.-Butylperbenzoat |
| 3,0 | Teile $Mg(OH)_2$-Paste (Marinco H®) |

Einsatzstoffe für Kernschicht A

- A1 Ethylen-Propylen-Dien-Terpolymer mit geringer Ungesättigtheit und 50 % Ethylengehalt, amorph (Buna AP® 331, Fa. Hüls)
- A2 Polyethylen (LD-PE)
  Dichte: 0,915-0,918 [g/ml]
  Schmelzindex MFI (190/2.16): 17-22 [$m^3$/10 min]
  Schmelztemperatur (DSC): 107 [°C]
- A3 Polyethylen (HD-PE)
  Dichte: 0,952-0,956 [g/ml]
  Schmelzindex MFI (190/2.16): 21-26 [$m^3$/10 min]
  Schmelztemperatur (DSC): 132 [°C]
- A4 Polyethylenrecyclat mit etwa gleichen Anteilen von HD-PE, MD-PE und LD-PE
- A5 Recyclat aus Polypropylen (50 %) und Polyethylen mit geringem Gehalt an Kaschierkleber
- A6 Blend aus 60 % Polypropylen (Schmelzindex MFI (230/2.16):
  70 [$cm^3$/10 min) und 40 % Polyamid-Recyclat aus einem Teppichboden nach GMT-Verfahren mit 30 % GF-Matte verstärkt
- A7 Copolymerisat aus 82 % Ethylen und 18 % Butylacrylat mit Schmelzindex (190/2.16): 1,4-21 [g/10 min] und einer Dichte von 0,922-0,926
- A8 Propylen-Ethylen-Blockcopolymerisat mit Schmelzindex MFI (230/2.16):
  2-2,5, einem Schmelzpunkt von 162°C (DSC) und einem Ethylengehalt von 8 %
- A9 3,8 mm dickes GMT mit einem Zug-E-Modul von 5000 [$N/mm^2$]. Das Halbzeug wurde nach EP-A 381 857, Beispiel 1, hergestellt; es enthält 30 % genadelte Glasfasermatte mit einem Flächengewicht von 700 [$g/m^2$] und carboxylmodifiziertes Propylenhomopolymerisat mit einem Schmelzpunkt (DSC) von 162°C. Durch Fließpressen bei 220°C lassen sich daraus Platten geringerer Dicke herstellen; durch Verpressen mehrerer Lagen erhält man dickere Platten.

Beispiele 1 bis 10

Zur Prüfung der Schichthaftung zwischen Kernschichten und SMC-Deckschichten wurden Sandwichplatten aus SMC und vorgefertigten Kernschichten A hergestellt. Dazu wurden in einem beheizbaren Plattenwerkzeug (5 x 150 x 150 mm) Kernschichten (140 x 140 mm) unterschiedlicher Dicke zwischen SMC-Lagen verpreßt (10 min, 150° C, 200 bar), wobei eine Polyestertrennfolie zwischen der unteren SMC-Lage und der Kernschicht A so eingelegt wurde, daß ein schmaler Randstreifen von 30 x 150 mm ohne Haftung zwischen den Schichten blieb.

Nach dem Preßvorgang wurden die Formstoffe aus dem kalten Werkzeug entnommen, die Ränder wurden besäumt, so daß der Schichtaufbau sichtbar war, und in den durch die Trennfolie erzeugten Spalt wurde eine Metallplatte eingeführt. Durch Hin- und Herbewegen der Metallplatte senkrecht zur Schichtebene wurde die Rißfront zwischen Kernschicht und Deckschicht vorangetrieben. Bei guter Haftung verlief die Rißebene entweder in der Deck- oder in seltenen Fällen in der Kernschicht.

Eine Abschälung der Decklagen in der Phasengrenzfläche wurde nicht beobachtet. In Tabelle 1 sind die Beispiele 1 bis 10 zusammengefaßt.

Tabelle 1

| Schichthaftung zwischen SMC (Deckschicht B) und Kernschichten A | | | | | |
|---|---|---|---|---|---|
| Beispiel | Kernschicht A | | SMC-Typ | Haftung | Rißausbreitung |
| | Material | Dicke [mm] | | | |
| 1 | A 1 | 3 | SMC 1 | sehr gut | in Kernschicht |
| 2 | A 2 | 3 | SMC 2 | sehr gut | in SMC-Schicht |
| 3 | A 3 | 3 | SMC 3 | sehr gut | in SMC-Schicht |
| 4 | A 4 | 3 | SMC 3 | sehr gut | in SMC-Schicht |
| 5 | A 5 | 3 | SMC 3 | sehr gut | in SMC-Schicht |
| 6 | A 6 | 2 | SMC 3 | sehr gut | in SMC-Schicht |
| 7 | A 7 | 3 | SMC 3 | sehr gut | in SMC-Schicht |
| 8 | A 8 | 3 | SMC 3 | sehr gut | in SMC-Schicht |
| 9 | A 9* | 3,8 | SMC 3 | sehr gut | in SMC-Schicht |
| 10 | A 9* | 2,0 | SMC 3 | sehr gut | in SMC-Schicht |

* Die Kernschichtplatten wurden vor dem Kontakt mit den SMC-Lagen auf 145° C erwärmt

Beispiele 11 bis 13

Zum Vergleich der Werkstoffeigenschaften wurden mit Hilfe eines Stahlwerkzeugs (5 x 150 x 150 mm) bei 150° C Probeplatten gepreßt (10 min, 200 bar), aus denen Prüfkörper für Biege- und Durchstoßversuche gearbeitet wurden. Dies betrifft den SMC 3-Formstoff und die Schichtverbunde aus SMC 3-Decklagen und A9- bzw. A4-Kernschichten. Die Herstellung der A9-Platten erfolgte durch Verpressen von zwei Lagen bei 220° C und die der A4-Kernschicht durch Verpressen von A4-Granulat bei 195° C zwischen Polyestertrennfolien mit nachfolgender Abkühlung der Presse auf 23° C. Die Ergebnisse der Prüfungen im Biegeversuch (E-Modul nach EN 63, 0,05-0,2 % Dehnung) und im Durchstoßversuch nach DIN 53 443, Teil 2 zeigen (Tabelle 2), daß die Schichtverbunde nach Beispielen 11 und 12 höhere Steifigkeiten und Festigkeiten aufweisen als GMT; auch beim Durchstoßversuch werden günstigere Ergebnisse erzielt. Vorteilhaft gegenüber SMC ist die geringere Dichte bei noch akzeptablen Eigenschaften.

Der Schichtverbund aus SMC 3/A4 (Beispiel 13) ist nagelbar, ohne daß die Deckschichten dabei abheben: In Vergleichsversuchen wurde eine hochglänzende Platte mit Hilfe von Stahlnägeln und für Holz geeigneten Nägeln auf einer Spanplatte befestigt. Mit GMT- und SMC-Platten aus den Vergleichsbeispielen gelang dies nicht, alle Nägel knickten beim Hämmern um.

Tabelle 2: Eigenschaften von Schichtwerkstoffen im Vergleich zu SMC und GMT

| Beispiel | | Vergleich | Vergleich | Beispiel 11 | Beispiel 12 | Beispiel 13 |
|---|---|---|---|---|---|---|
| Werkstoff | | GMT A 9 | SMC 3 (gehärtet) | SMC 3/A 9 | SMC 3/A 9 | SMC 3/A 4 |
| Probendicke | [mm] | 5,1 | 5,2 | 5,4 | 5,1 | 4,85 |
| Kernschicht-Dicke | [mm] | 5,1 | 5,2 | 3,8 | 1,9 | 3,7 |
| E-Modul | [MPa] | 5170 | 10500 | 9700 | 10300 | 7460 |
| Dichte | [g/cm³] | 1,1 | 1,85 | 1,3 | 1,6 | 1,2 |
| Durchstoßversuch | | | | | | |
| ● Maximalkraft | [N] | 6850 | 10306 | 7727 | 7709 | 6853 |
| ● Gesamtarbeit | [Nm] | 54 | 90 | 71 | 63 | 52 |

Beispiel 14

Zur Verbesserung des Splitterverhaltens beim Bruchvorgang wurden zwei Verbundwerkstoffe hergestellt aus jeweils 1 mm dicken Kernschichten A 4 zwischen Deckschichten aus SMC 3, wobei die Formmassen 10 min bei 160 ° C unter einem Druck von 200 bar in Stahlwerkzeugen zu Platten (150 x 150 mm) verpreßt

wurden. Ein Formteil war 3 mm und das andere 5 mm dick. Zur Beurteilung des Bruchverhaltens wurden daraus 5 cm breite Streifen geschnitten und über eine Kante gebogen, bis die SMC-Deckschichten durchbrachen. Selbst nach mehrmaligem Hin- und Herbiegen blieb die Kernschicht als zusammenhängende Folie erhalten. Die SMC-Bruchstücke hafteten daran sehr fest.

Beispiel 15

Zur Oberflächenbeschichtung von GMT wurde eine Zubereitung aus folgenden Komponenten verwendet:

| | |
|---|---|
| 100 | Teile UP-Harz 4 |
| 150 | Teile Füllstoff Kreide (Millicarb®) |
| 4 | Teile Zinkstearat |
| 5 | Teile Titandioxid |
| 1,5 | Teile tert.-Butylperbenzoat |

In einem Stahlplattenwerkzeug wurde eine 3,8 mm dicke Platte aus GMT A 9 auf 145 °C erwärmt, die Presse geöffnet, die Zubereitung aufgegossen, das Werkzeug geschlossen und 10 min bei der angegebenen Temperatur unter 200 bar Druck gehalten. Nach Abkühlung auf Raumtemperatur resultierte ein gleichmäßig weiß beschichtetes Formteil mit glatter Oberfläche und guter Haftung beider Schichten zueinander, was durch Gitterschnitte und Abschälversuche mit einem Messer geprüft wurde. Die Beschichtung hatte eine Dicke von 500 bis 1000 µm.

Beispiel 16

Ein Verbundschichtstoff wurde aus Naßpreßlaminaten und einer 2 mm dicken Kernschicht A 8 hergestellt. Aus folgender Harz/Füllstoffmischung und zwei Lagen styrolunlöslich gebundener Glasfasermatte mit einem Flächengewicht von 450 [g/m$^2$] wurden zwei Laminate gefertigt (Handimprägnierung):

| | |
|---|---|
| 70 | Teile UP-Harz 2 |
| 30 | Teile UP-Harz 4 |
| 120 | Teile Füllstoff Kreide (Millicarb®) |
| 1,5 | Teile tert.-Butylperbenzoat |

Auf einer Polyestertrennfolie wurde das erste Laminat mit der Polymerschicht A 8 bedeckt, darüber das zweite Laminat gelegt, das Paket mit Polyesterfolie umwickelt und in einem Plattenwerkzeug (150 x 150 x 5 mm) bei 150 °C und einem Druck von 200 bar 10 min verpreßt. Nach Entnahme des Formstoffs aus der kalten Presse und Besäumen resultierte ein Verbundwerkstoff mit ausgezeichneter Schichthaftung, deren Kern- und Deckschicht ließen sich mit Hilfe eines zwischen die Lagen getriebenen Metallkeils nicht ohne Zerstörung der Deckschicht trennen.

**Patentansprüche**

**1.** Schichtstoff, bestehend aus
   A. einer Kernschicht aus einem Olefinpolymerisat und
   B. mindestens einer Deckschicht aus einem gehärteten ungesättigten Polyesterharz,

   wobei die Schichten ohne haftvermittelnde Zwischenschichten oder mechanische Verankerung unmittelbar miteinander verbunden sind und so gut aneinander haften, daß beim Versuch, sie zu trennen, die Rißfront nicht an der Grenzfläche, sondern innerhalb einer der beiden Schichten verläuft.

**2.** Schichtstoff nach Anspruch 1, dadurch gekennzeichnet, daß das Olefinpolymerisat im wesentlichen unvernetzt ist.

**3.** Schichtstoff nach Anspruch 1, dadurch gekennzeichnet, daß die Kernschicht aus einem faserverstärktem Propylenpolymerisat, vorzugsweise aus glasmattenverstärktem Polypropylen besteht.

4. Schichstoff nach Anspruch 1, dadurch gekennzeichnet, daß die Kernschicht aus Polyethylen oder einem Ethylen-Propylen-Copolymerisat besteht.

5. Schichstoff nach Anspruch 1, dadurch gekennzeichnet, daß die Schicht A bis zu 50 Gew.-% eines amorphen gesättigten Polyesters enthält.

6. Schichtstoff nach Anspruch 1, dadurch gekennzeichnet, daß die Deckschichten aus gehärtetem glasfaserverstärktem Polyesterharz, vorzugsweise SMC- oder BMC-Material bestehen.

7. Schichtstoff nach Anspruch 1, dadurch gekennzeichnet, daß der ungesättigte Polyester der Deckschichten cycloaliphatische Bausteine, vorzugsweise Dicyclopentadienyleinheiten oder alkylsubstituierte Alkohole oder Etheralkohol-Bausteine, in einer Menge von 0,1 bis 1 Mol pro (Maleinsäure bzw. Fumarsäure)-Baustein enthält.

8. Schichtstoff nach Anspruch 1, dadurch gekennzeichnet, daß die Schichten durch C-C-Verknüpfung zwischen der Polyolefin-Molekülkette und der Molekülkette des gehärteten ungesättigten Polyesterharzes miteinander verbunden sind.

9. Automobilteil nach Anspruch 1, dadurch gekennzeichnet, daß es aus glasmattenverstärktem Polypropylen als Kernschicht besteht, auf die mindestens eine dünne Deckschicht aus gegebenenfalls faserverstärktem Polyesterharz zur Verbesserung der Oberflächenqualität aufgebracht ist.

10. Automobilteil nach Anspruch 1, dadurch gekennzeichnet, daß es aus einem SMC- oder BMC-Laminat besteht, welches zur Verbesserung des Bruchverhaltens mit einer Kernschicht aus Polypropylen, Polyethylen oder einem Ethylen/Propylenkautschuk versehen ist.

11. Baumaterial nach Anspruch 1, dadurch gekennzeichnet, daß es aus einer Kernschicht aus gefülltem Polyethylen besteht, welche zur Erhöhung der Biegesteifigkeit mit Deckschichten aus faserverstärktem Polyesterharz versehen ist.

12. Verfahren zur Herstellung der Schichtstoffe nach Anspruch 1, dadurch gekennzeichnet, daß man auf die vorgeformte Kernschicht A unmittelbar ungesättigtes, Peroxid enthaltendes Polyesterharz aufbringt und unter Druck bei 100 bis 200 °C zur Deckschicht B aushärtet und dabei mit der Kernschicht verbindet.

Europäisches Patentamt

# EUROPÄISCHER RECHERCHENBERICHT

Nummer der Anmeldung

EP 92 11 2036

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br><br>Y | DE-B-1 005 727 (HOUILLERES DU BASSIN DU NORD ET DU PAS-DE-CALAIS)<br><br>*Insgesamt* | 1,2,4,6,8,11,12<br>1,2,4,6,8,10-12 | C08J5/12<br>B32B27/08 |
| X<br><br>Y | EP-A-0 272 383 (RÜTGERSWERKE AG)<br><br>* Ansprüche 1,2,7,8 *<br>* Seite 1, Zeile 1 - Seite 1, Zeile 8 *<br>* Beispiel 1 * | 1,4,6,10,12<br>1,2,4,6,8,10-12 | |
| A | DE-A-3 524 396 (BASF AG)<br>* Anspruch 1 *<br>* Seite 3, Zeile 29 - Seite 3, Zeile 30 * | 1,3,9 | |
| A | DE-A-3 017 694 (USS ENGINEERS AND CONSULTANTS, INC.)<br>* Ansprüche 1-7 *<br>* Seite 10, Zeile 23 - Seite 11, Zeile 7 *<br>* Beispiel 9 * | 1,7 | |
| | ----- | | RECHERCHIERTE SACHGEBIETE (Int. Cl.5 )<br>C08J<br>B32B |

Der vorliegende Recherchenbericht wurde für alle Patentansprüche erstellt

| Recherchenort | Abschlußdatum der Recherche | Prüfer |
|---|---|---|
| DEN HAAG | 23 OKTOBER 1992 | HALLEMEESCH A.D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)